# EUROPÄISCHE PATENTSCHRIFT

(11) **EP 1 634 756 B1**
(45) Veröffentlichungstag und Bekanntmachung des Hinweises auf die Patenterteilung: **14.11.2007**
(21) Anmeldenummer: 05018126.2
(22) Anmeldetag: 20.08.2005
(51) Int. Cl.: B60K 17/04, B60K 7/00

(54) **Antriebseinrichtung**
Drive arrangement
Ensemble d'entraînement

(30) Priorität: 08.09.2004 DE 102004043808
(43) Veröffentlichungstag der Anmeldung: 15.03.2006
(73) Patentinhaber: Holmer Maschinenbau GmbH, 84069 Eggmühl (DE)
(72) Erfinder: Hirthammer, Otto, 93128 Regenstauf (DE)
(74) Vertreter: Graf, Helmut

(56) Entgegenhaltungen:
- EP-A- 1 031 452
- US-A- 6 024 182

## Beschreibung

Die Erfindung bezieht sich auf ein Antriebssystem oder eine Antriebseinrichtung gemäß Oberbegriff Patentanspruch 1.

Antriebseinrichtungen für Erntefahrzeuge, beispielsweise Erntefahrzeuge zum Roden von Kartoffeln, Zuckerrüben oder dergleichen Wurzelfrüchte sind insbesondere auch in Form von hydraulischen Antrieben bekannt und dabei speziell auch in der Form, dass den angetriebenen Fahrzeugachsen jeweils wenigstens ein Hydraulikmotor zugeordnet ist, wobei die Hydraulikmotoren über eine steuer- oder regelbare und von einem Verbrennungsmotor angetriebene Hydraulik-Pumpe versorgt werden.

Bekannt ist eine Antriebseinheit für Fahrzeuge mit zwei über Ausgangswellen antreibbaren Fahrzeugachsen (GB 2 365 084). Das Antriebssystem umfasst u.a. eine Eingangswelle, die mit einem Differenzial verbunden ist, welches zwei Ausgangswellen besitzt, die ihrerseits über Planetengetriebe antriebsmäßig mit jeweils zwei Rädern des Fahrzeugs verbunden sind.

Bekannt ist weiterhin eine Antriebsachse für elektromotorisch angetriebene Fahrzeuge (WO 03/064 198), bei der zwei getrennt arbeitende, aber über eine gemeinsame Steuerung in ihrem Arbeitsverhalten gesteuerte elektrische Asynchronmotoren mit ihren Motorwellen jeweils über ein Planetengetriebe antriebsmäßig mit einer angetriebenen Antriebswelle verbunden sind.

Eine Antriebseinrichtung mit den Merkmalen des Oberbegriffs des unabhängigen Anspruchs 1 ist bekannt aus US-A-6 024 182.

Aufgabe der Erfindung ist es, eine Antriebseinrichtung aufzuzeigen, die insbesondere für Erntefahrzeuge geeignet ist und mit der im Arbeitseinsatz eine mechanische, antriebsmäßige Verbindung auch unterschiedlicher Laufwerke bei einem differenzialartigen Ausgleich der Drehbewegungen der einzelnen Laufwerke möglich ist.

Zur Lösung dieser Aufgabe ist eine Antriebseinrichtung entsprechend dem Patentanspruch 1 ausgebildet.

Im Betriebszustand für den normalen Arbeitseinsatz, d.h. für das Fahren bzw. Arbeiten im Gelände wird über die erfindungsgemäße Antriebseinrichtung ein Ausgleich der Drehbewegung der Laufwerke der Fahrzeugachsen erreicht. Hierdurch wird insbesondere auch vermieden, dass mit dem Fahrzeuggewicht bzw. mit dem Nachgeben oder Einfedern der Druckluftbereifung sich ändernde effektive Durchmesser der Räder zu internen Spannungen oder Belastungen in der Antriebseinrichtung führen. Dieser Vorteil kommt insbesondere dann zum tragen, wenn die Laufwerke einer Fahrzeugachse, beispielsweise der vorderen Fahrzeugachse, von Rädern mit Druckluftbereifung und die Laufwerke einer anderen Fahrzeugachse, beispielsweise der hinteren Fahrzeugachse, von einem Band- oder Gummilaufwerk gebildet sind. Unter Laufwerk sind im Sinne der Erfindung u.a. Fahrzeugräder oder Radanordnungen, aber auch Ketten- und Bandlaufwerke zu verstehen.

Weitere Ausführungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und Draufsicht eine Antriebseinrichtung der Erfindung mit dem vorderen und rückwärtigen Fahrwerk eines Fahrzeugs, insbesondere eines selbstfahrenden landwirtschaftlichen Arbeits- oder Erntefahrzeugs (z.B. Fahrzeug zum Roden von Zuckerrüben, Kartoffeln oder dergleichen Wurzelfrüchten);

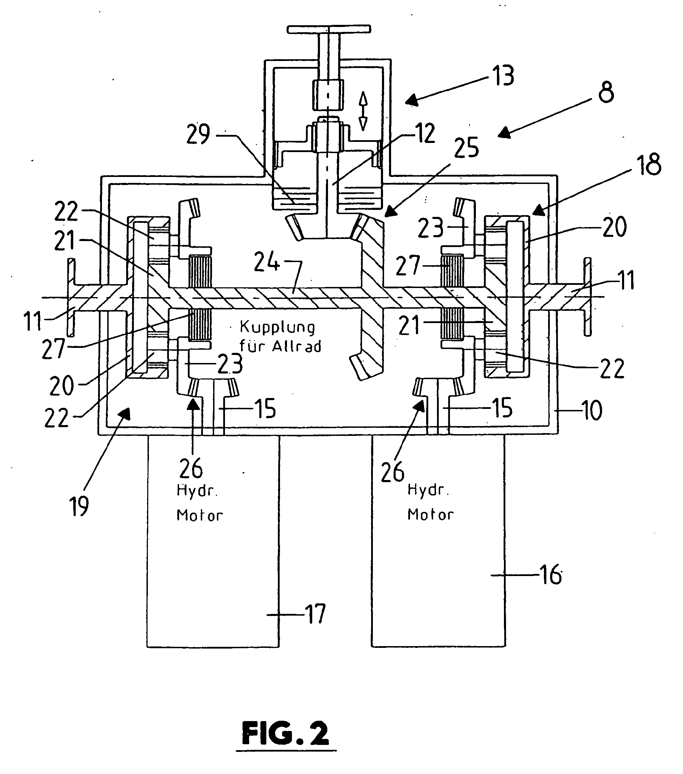

- Fig. 2: in vereinfachter schematischer Darstellung eine Getriebeanordnung der Antriebseinrichtung der Figur 1;
- Fig. 3: in vereinfachter Darstellung eine weitere mögliche Ausführungsform der Getriebeanordnung einer Antriebseinrichtung gemäß der Erfindung.

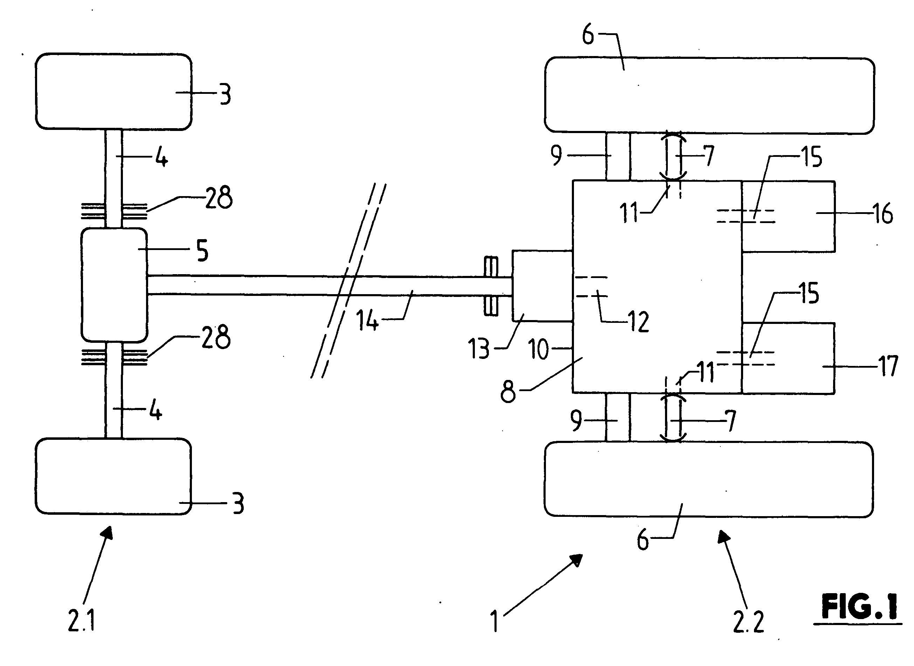

Die in der Figur 1 allgemein mit 1 bezeichnete Antriebseinrichtung ist Teil eines landwirtschaftlichen Fahrzeugs, beispielsweise eines landwirtschaftlichen Arbeits- oder Erntefahrzeugs zum Roden von Wurzelfrüchten, wie z.B. Kartoffeln, Zuckerrüben usw. Die Antriebseinrichtung 1 besteht aus einer vorderen Fahrzeugachse 2.1 mit zwei Räder 3, die z.B. lenkbar sind und über jeweils eine Welle 4 von einem für beide Räder gemeinsames Differenzial 5 mit Differenzialsperre antreibbar sind. Die hintere Fahrzeugachse 2.2 ist von zwei Bandlaufwerken 6 gebildet, die jeweils über eine Gelenkwelle 7 zwischen den beiden Gelenkwellen 7 angeordnete Getriebeanordnung 8 angetrieben werden.

Bei der dargestellten Ausführungsform sind die beiden Bandlaufwerke 6 jeweils an Trägern 9 befestigt, die mit ihrer Längserstreckung achsgleich zueinander angeordnet sind und bei Geradeausfahrt des Fahrzeugs mit ihrer Längserstreckung horizontal und senkrecht zur Fahrzeuglängsachse orientiert sind. Die beiden Träger 9 sind dabei jeweils an einem die Getriebeanordnung 8 aufnehmenden Gehäuse 10 mit einem Ende gehalten bzw. angeflanscht.

Zusätzlich zu den beiden, von jeweils einer Welle 11 gebildeten Ausgängen, mit denen die Getriebeanordnung 8 mit jeweils einer Gelenkwelle 7 verbunden ist, besitzt die Getriebeanordnung 8 einen weiteren, von einer Welle 12 gebildeten Ausgang, der über eine Kupplungseinrichtung 13 und eine sich in Richtung der Fahrzeuglängsachse erstreckende Kardanwelle 14 mit dem Differenzial 5 antriebsmäßig verbunden ist.

Die Getriebeanordnung 8 besitzt weiterhin zwei jeweils von einer Welle 15 gebildete Eingänge. Jeder dieser Eingänge ist mit einem regelbaren Antriebsaggregat 16 bzw. 17 verbunden.

Die Anordnung ist hierbei so getroffen, dass die beiden Wellen 11 achsgleich miteinander angeordnet sind, und zwar bei Geradeausfahrt des Fahrzeugs mit ihren Achsen in horizontaler oder annähernd horizontaler Richtung und senkrecht zur Fahrzeugslängsrichtung, und an einander abgewandten Seiten aus dem Gehäuse 10 herausgeführt sind. Die Welle 12 und die mit dieser Welle antriebsmäßig verbundene und beispielsweise an dem Gehäuse 10 der Getriebeanordnung 8 angeflanschte Kupplungsanordnung 13 ist ebenfalls mit ihrer Achse in horizontaler Richtung orientiert und an einer der Vorderachse 2.1 zugewandten Seite des Gehäuses 10 vorgesehen. Die beiden Antriebe 16 und 17 bzw. die mit diesen Antrieben verbundenen Eingangswellen 15 befinden sich an der der Vorderachse 2.1 abgewandten Rückseite des Gehäuses 10.

Die Kupplungsanordnung 13 ist bei der dargestellten Ausführungsform so ausgebildet, dass sie zwei Betriebszustände aufweist, und zwar einen ersten Betriebszustand, in dem über die Kupplungsanordnung 13 eine antriebsmäßige Verbindung zwischen der Ausgangswelle 12 und der Kardanwelle 14 besteht, und einen zweiten Zustand, in welchem diese antriebsmäßige Verbindung unterbrochen und zugleich die Welle 12 gegen Drehen blockiert ist.

Die Getriebeanordnung 8 besteht im Wesentlichen aus zwei Planetengetrieben 18 und 19, die bei der dargestellten Ausführungsform identisch ausgebildet sind und jeweils aus einem äußeren Hohlrad 20, aus einem inneren Sonnenrad 21 und aus mehreren, zwischen dem Hohlrad 20 und dem Sonnenrad 21 wirkenden Planetenrädern 22 bestehen, die an einem Planetenradträger 23 frei drehbar gelagert sind, und zwar um Achsen parallel zu der Achse des jeweiligen Planetengetriebes 18 bzw. 19, d.h. parallel zur Achse des zugehörigen Hohlrades 20 und Sonnenrades 21. Bei der dargestellten Ausführungsform ist das jeweilige Hohlrad 20 mit der achsgleich mit der Achse des Planetengetriebes 18 bzw. 19 angeordneten Welle 11 unmittelbar verbunden.

Die beiden Sonnenräder 21 sind antriebsmäßig miteinander sowie mit der Ausgangswelle 12 verbunden. Hierfür sind die beiden Sonnenräder 21 auf einer gemeinsamen Welle 24 vorgesehen, die über einen von zwei Kegelrädern gebildeten Kegelradantrieb 25 antriebsmäßig fest mit der Welle 12 verbunden ist. Die beiden Planetenradträger 23 sind jeweils über einen Kegelradantrieb 26 mit einer der Wellen 15 und damit antriebsmäßig mit dem Antriebsaggregat 16 bzw. 17 verbunden.

Die Getriebeanordnung 8 weist weiterhin zwei Kupplungen 27 auf, die bei der dargestellten Ausführungsform als Lamellenkupplungen ausgebildet sind, und zwar derart, dass beim Aktivieren dieser Kupplungen 27 eine starre antriebsmäßige Verbindung zwischen dem jeweiligen Planetenradträger 23 und der internen Welle 24 besteht.

Durch die beiden Planetengetriebe wird jeweils der größere Teil des von den beiden Antriebsaggregaten 16 und 17 erzeugten Drehmomentes auf die Ausgangswellen 11 übertragen und der kleinere Teil über die interne Welle 24 auf die Ausgangswelle 12. Bei der dargestellten Ausführungsform sind die beiden Planetengetriebe 18 und 19 so ausgelegt, dass beispielsweise etwa 60% des jeweiligen Drehmomentes auf die Wellen 11 und 40% des Drehmomentes auf die Welle 24 übertragen werden.

Mit 28 sind noch beispielsweise von Lamellenkupplungen gebildete Bremsen an der Vorderachse und mit 29 eine entsprechende Bremse an der Welle bezeichnet.

Mit der Antriebseinheit 1 sind verschiedenste Arbeitsmodi möglich. Im normalen Arbeitsbetrieb d.h. beim Fahren des Fahrzeugs auf einem Feld, z.B. beim Roden von Wurzelfrüchten wirkt die Antriebseinrichtung als Allradantrieb mit Differenzial- und Ausgleichswirkung in Bezug auf die Drehbewegung der Laufwerke (Räder 3 und Bandlaufwerke 6), so dass u.a. Spannungen in der Antriebseinrichtung, die sich z.B. durch Änderungen des wirksamen Raddurchmessers der Räder 3 bei unter dem Fahrzeuggewicht einfedernden Fahrzeugreifen ergeben können, wirksam vermieden sind.

Für diesen normalen Arbeitsbetrieb ist die Ausgangswelle 12 über die Kupplungsanordnung 13 und die Kardanwelle 14 antriebsmäßig mit der Vorderachse bzw. mit dem dortigen Differenzial 5 verbunden. Die beiden Kupplungen 27 sind nicht aktiviert und der Antrieb des Fahrzeugs erfolgt über die beiden Antriebsaggregate 16 und 17, die jeweils von einem Hydraulikmotor gebildet sind und über eine von einem Antriebsmotor (Verbrennungsmotor) angetriebenen, regelbaren Hydraulikpumpe betrieben werden. Das Bremsen des Fahrzeugs erfolgt nötigenfalls über die Bremsen 28 sowie über die Bremse 29 und durch entsprechendes Betätigen der Kupplungen 27. ist z.B. beim Arbeiten auf dem Feld eine Sperre der Differenzialwirkung notwendig, weil das Fahrzeug im Wesentlichen nur auf einem Rad 3 der vorderen Fahrzeugachse und auf einem Bandlaufwerk 6, beispielsweise auf dem diesen Rad 3 diagonal gegenüberliegenden Bandlaufwerk 6 aufsteht und freigefahren werden muss, erfolgt eine Sperrung des Differenzials 5 sowie auch eine Sperre der Differenzialwirkung der Getriebeanordnung 8, und zwar dadurch, dass die Kupplungen 27 betätigt werden, so dass dann durch Blockierung der Planetengetriebe 18 und 19 eine starre antriebsmäßige Verbindung zwischen den beiden Antriebsaggregaten 16 und 17 und der internen Welle 24 sowie auch über die nicht mehr um die Sonnenräder 21 umlaufenden Planetenräder 22 mit den Hohlrädern 20 und damit mit der jeweiligen Ausgangswelle 11 hergestellt ist.

Die Antriebseinrichtung 1 einschließlich der Antriebsaggregate 16 und 17 ist so ausgelegt, dass das an die Räder 3 der vorderen Fahrzeugachse und an die Bandlaufwerke 6 der hinteren Fahrzeugachse übertragene Drehmoment sowie die Geschwindigkeit im normalem Betriebszustand der Antriebseinrichtung 1 optimal den Erfordernissen beim Fahren bzw. Arbeiten auf dem Feld angepasst sind. Um ein Fahren auf öffentlichen Wegen und Straßen mit größerer Geschwindigkeit zu ermöglichen, ist mit der Antriebseinheit 1 ein weiterer Betriebszustand möglich, bei dem über die Kupplungsanordnung 13 die antriebsmäßige Verbindung zu der vorderen Fahzeugachse 2.1 getrennt und zugleich die Ausgangswelle 12 und damit auch die interne Welle 24 sowie die Sonnenräder 21 blockiert werden. Über die von den beiden Antriebsaggregaten 16 und 17 angetriebenen Planetenradträgern 23 und über die sich an dem jeweiligen Sonnenrad 21 abwälzenden und mit dem zugehörigen Hohlrad 20 zusammenwirkenden Planetenrädern 22 wird dann bei gleicher Drehgeschwindigkeit der Antriebsaggregate 16 und 17 die jeweilige Ausgangswelle 11 mit einer im Vergleich zum normalen Arbeitsbetrieb höheren Geschwindigkeit angetrieben. Hierbei wirkt jedes Antriebsaggregat 16 und 17 jeweils nur auf eine Ausgangswelle 11, so dass durch Steuerung der Antriebsaggregate ein unterschiedlicher Antrieb der Bandlaufwerke 6, d.h. eine unterschiedliche Geschwindigkeit für diese Bandlaufwerke 6 und damit zumindest eine Unterstützung der Lenkung des Fahrzeugs möglich sind.

Das Bremsen der hinteren Fahrzeugachse erfolgt in diesem Betriebszustand beispielsweise durch entsprechendes Betätigen der Kupplungen 27.

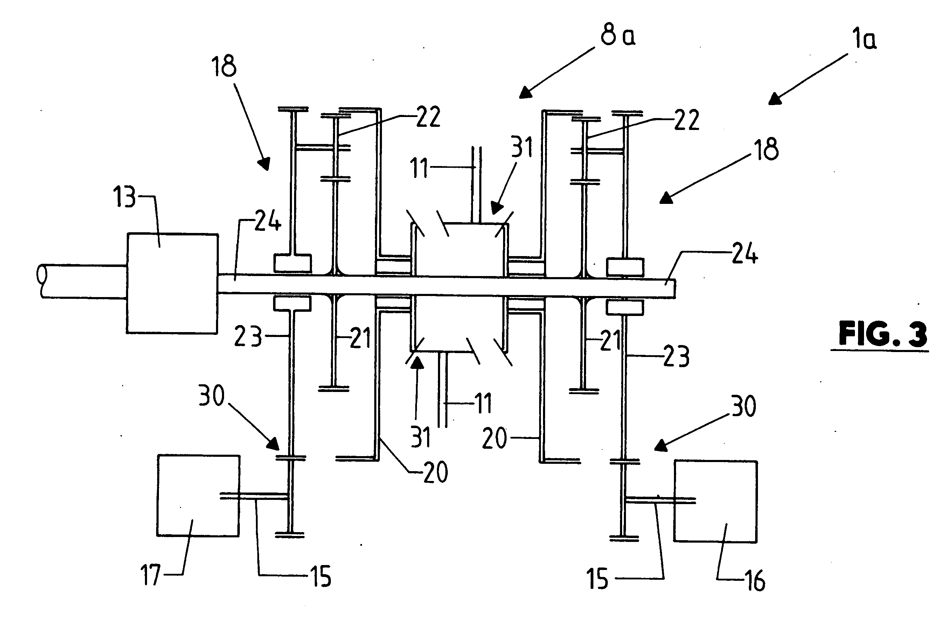

Die Figur 3 zeigt in einer vereinfachten Darstellung eine Getriebeanordnung 8a, die sich von der Getriebeanordnung 8 im wesentlichen dadurch unterschiedet, dass die beiden Planetengetriebe 18 und 19 bzw. deren gemeinsame Achse und damit auch die Achse der internen Welle 24 in Richtung der Fahrzeuglängsachse orientiert sind. Die beiden Antriebsaggregate 16 und 17 sind jeweils über einen Zahnradantrieb 30 mit dem Planetenradträger 23 des betreffenden Planetengetriebes 18 antriebsmäßig verbunden. Für die antriebsmäßige Verbindung zwischen dem Hohlrad 20 und der jeweiligen Ausgangswelle 11 ist jeweils ein Kegelradantrieb 31 vorgesehen. Die Welle 24, auf der die beiden Sonnenräder 21 der Planetengetriebe 18 und 19 vorgesehen sind, bildet bei dieser Ausführungsform gleichzeitig die mit der Kupplungsanordnung 13 antriebsmäßig verbundene Ausgangswelle, so dass die Welle 12 entfällt. Die beiden Ausgangswellen 11, die mit ihren Achsen wiederum senkrecht zur Fahrzeuglängsachse orientiert sind, weisen bei dieser Ausführungsform in Fahrzeuglängsrichtung einen Versatz auf, der dann durch entsprechende Ausbildung der Bandlaufwerke 6 oder auf andere Weise ausgeglichen wird.

Der Vorteil der Antriebseinrichtungen 1 und 1 a besteht generell darin, dass solche Funktionselemente der Antriebseinrichtung, die ein größeres Bauvolumen aufweisen, nämlich u.a. das Differenzial 5 und die Getriebeanordnung 8 bzw. 8a sich im Bereich der vorderen bzw. rückwärtigen Fahrzeugachse zwischen den dortigen Laufwerken (Räder 3 bzw. Bandlaufwerken 6) befinden, der dazwischen liegend Teil des Fahrzeugs bzw. des Fahrzeugrahmens im Wesentlichen von Elementen der Antriebseinrichtung freigehalten ist und somit dort genügend Platz für die Unterbringung weiterer Funktionselemente des Fahrzeugs, beispielsweise Erntefahrzeugs verbleibt, z.B. für die Unterbringung von Transporteuren, Siebbändern usw.

Weitere grundsätzliche Vorteile der Antriebseinrichtungen 1 und 1a bestehen darin, dass unterschiedliche Betriebsarten möglich sind, aber auch darin, dass bei einem gemeinsamen, mechanischen Antrieb für die Laufwerke der vorderen und rückwärtigen Fahrzeugachse bei dem normalen Betrieb für das Fahren und Arbeiten im Feld ein Ausgleich innerhalb des Antriebssystem erfolgt und hierbei insbesondere auch die Kombination von unterschiedlichen Fahrwerken möglich ist, ohne dass es in der Antriebseinrichtung zu Spannungen oder erhöhten Belastungen kommt.

Speziell die Antriebseinrichtung 1 a hat den Vorteil einer sehr schmalen Bauweise in Richtung quer zur Fahrzeugsachse.

Unabhängig von der jeweiligen Ausbildung kann die Getriebeanordnung 8 oder 8a bzw. deren Gehäuse 10 zugleich auch als lenkbarer Achsträger ausgebildet sein, und zwar in der Form, dass für das Lenken das Gehäuse 10 insgesamt um eine vertikale Achse schwenkbar an einem entsprechenden Drehkranz am Fahrzeugrahmen gehalten ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

Während bei den beschriebenen Ausführungsformen jeweils das Hohlrad 20 den mit der Ausgangswelle 11 verbundenen Ausgang der Planetengetriebe 18 und 19 bildet, ist es u.a. auch möglich, diese Funktion in Sonnenrädern 21 zuzuordnen und diese dann mit den Ausgangswellen 11 und die Hohlräder entsprechend mit der gemeinsamen Welle 24 zu verbinden, wobei sich dann allerdings eine andere Verteilung der Drehmomente auf die Wellen 11 und 24 ergibt.

### Bezugszeichenliste

- 1, 1a: Antriebseinrichtung
- 2.1: vordere Fahrzeugachse
- 2.2: hintere Fahrzeugachse
- 3: Rad
- 4: Antriebswelle
- 5: Differenzial
- 6: Band laufwerk
- 7: Gelenkwelle
- 8, 8a: Getriebeanordnung
- 9: Träger für Bandlaufwerk 6
- 10: Gehäuse der Getriebeanordnung 8 bzw. 8a
- 11, 12: Ausgangswelle
- 13: Kupplungsanordnung
- 14: Kardanwelle
- 15: antreibende Welle
- 16, 17: Antriebsaggregat oder Motor
- 18, 19: Planetengetriebe
- 20: Hohlrad
- 21: Sonnenrad
- 22: Planetenrad
- 23: Planetenradträger
- 24: getriebeinterne Welle
- 25, 26: Kegelradantrieb
- 27: Kupplung
- 28, 29: Bremse
- 30: Zahnradantrieb
- 31: Kegelradantrieb

## Patentansprüche

1. Antriebseinrichtung für ein Fahrzeug, insbesondere Erntefahrzeug, mit wenigstens zwei über Ausgangswellen (11, 12) einer Getriebeanordnung (8, 8a) antreibbaren Fahrzeugachsen,
wobei die Getriebeanordnung (8, 8a) wenigstens zwei Eingangswellen (15) aufweist, die jeweils mit einem regelbaren Antriebsaggregat (16, 17) verbunden sind,
wobei die Getriebeanordnung (8, 8a) für jedes Antriebsaggregat (16, 17) wenigstens ein Planetengetriebe (18, 19) mit drei Planetengetriebeelementen aufweist, die von einem Hohlrad (20), von einem Sonnenrad (21) und von einem Planetenradträger (23) mit wenigstens einem Planetenrad (22) gebildet sind,
wobei ein erstes der Planetengetriebeelemente (20, 21, 23) jedes Planetengetriebes (18 19) mit einer Eingangswelle (15) verbunden ist,
wobei ein zweites der Planetengetriebeelemente (20, 21, 23) jedes Planetengetriebes (18, 19) jeweils mit einer ersten Ausgangswelle (11) zum Antrieb eines Laufwerks (6) einer Fahrzeugachse (2.2) verbunden ist, **dadurch gekennzeichnet,**
**dass** ein drittes der Planetengetriebeelemente (20, 21, 23) jedes Planetengetriebes (18, 19) mit einer gemeinsamen weiteren Ausgangswelle (12, 24) für den Antrieb der Laufwerke einer weiteren Fahrzeugachse (2.1) verbunden sind.

2. Antriebseinrichtung nach Anspruch 1, **dadurch gekennzeichnet, dass** die Antriebsaggregate (16, 17) unabhängig voneinander steuerbar sind.

3. Antriebseinrichtung nach Anspruch 1 oder 2, **dadurch gekennzeichnet,**
**dass** das erste Planetengetriebeelement der Planetenradträger (23), das zweite Planetengetriebeelement das Hohlrad (20) und das dritte Planetengetriebeelement das Sonnenrad (21) des betreffenden Planetengetriebes (18, 19) ist,
oder
**dass** das erste Planetengetriebeelement der Planetenradträger (23), das zweite Planetengetriebeelement das Sonnenrad (21) und das dritte Planetengetriebeelement das Hohlrad (20) des betreffenden Planetengetriebes (18, 19) ist.

4. Antriebseinrichtung nach einem der vorhergehenden Ansprüche, **dadurch gekennzeichnet, dass** in einem mechanischen Antriebsstrang zwischen der weiteren Ausgangswelle (12, 24) und der weiteren Fahrzeugachse (2.1) eine Kupplungsanordnung (13) vorgesehen ist, über die in einem ersten Betriebszustand eine antriebsmäßige Verbindung zwischen der Getriebeanordnung (8, 8a) und der weiteren Fahrzeugachse (2.1) besteht und die in einem zweiten Betriebszustand diese antriebsmäßige Verbindung unterbricht und zugleich die mit der Kupplungsanordnung (3) antriebsmäßig verbundene weitere Ausgangswelle (12, 24) gegen Drehen blockiert.

5. Antriebseinrichtung nach einem der vorhergehenden Ansprüche, **dadurch gekennzeichnet,**
**dass** das zweite der Planetengetriebeelemente (20, 21, 23) jedes Planetengetriebes (18, 19) auf einer der ersten Ausgangswellen (11) vorgesehen ist,
und/oder
**dass** das zweite der Planetengetriebeelemente (20, 21, 23) jedes Planetengetriebes (18, 19) jeweils über eine Zahnradanordnung (31) mit einer der ersten Ausgangswellen (11) verbunden ist.

6. Antriebseinrichtung nach einem der vorhergehenden Ansprüche, **dadurch gekennzeichnet, dass** die dritten der Planetengetriebeelemente (20, 21, 23) der Planetengetriebe (18, 19) auf einer gemeinsamen Welle (24) der Getriebeanordnung (8, 8a) vorgesehen sind, und dass die gemeinsame Welle (24) die weitere Ausgangswelle bildet oder über eine Zahnradverbindung (25) mit der zweiten Ausgangswelle (12) verbunden ist.

7. Antriebseinrichtung nach einem der vorhergehenden Ansprüche, **gekennzeichnet durch** steuerbare Mittel (27) zum Sperren der Funktion der Planetengetriebe (18, 19) bzw. zum Blockieren der Drehbewegung wenigstens eines Planetengetriebeelementes der Planetengetriebe (18, 19),
wobei die steuerbaren Mittel (27) zum Blockieren der Planetengetriebe (18, 19) beispielsweise jeweils von wenigstens einer zwischen dem Planetenradträger (23) und dem Sonnenrad (21) und/oder Hohlrad (20) wirkenden steuerbaren Kupplung (27) gebildet sind.

8. Antriebseinrichtung nach einem der vorhergehenden Ansprüche, **dadurch gekennzeichnet, dass** die Achsen der ersten Ausgangswellen (11) und die Achsen der Planetengetriebe (18, 19) achsgleich angeordnet sind,
wobei die Planetengetriebe (18, 19) mit ihren Achsen beispielsweise senkrecht zu einer Fahrzeuglängsachse orientiert sind.

9. Antriebseinrichtung nach einem der vorhergehenden Ansprüche, **dadurch gekennzeichnet, dass** die Achsen der Planetengetriebe (18, 19) parallel zu einer Fahrzeuglängsachse orientiert sind.

10. Antriebseinrichtung nach einem der vorhergehenden Ansprüche, **dadurch gekennzeichnet, dass** die ersten Ausgangswellen (11) mit ihren Achsen relativ zueinander radial, beispielsweise in Fahrzeuglängsrichtung versetzt sind.

## Claims

1. Drive device for a vehicle, more particularly a harvester, with at least two vehicle axles which can be driven through output shafts (11, 12) of a transmission assembly (8, 8a) wherein the transmission assembly (8, 8a) has at least two input shafts (15) which are each connected to a controllable drive unit (16, 17), wherein the transmission assembly (8, 8a) for each drive unit (16, 17) has at least one planetary gearing (18, 19) with three planetary gearing elements which are formed by a hollow wheel (20), by a sun wheel (21) and by a planetary wheel support (23) with at least one planetary wheel (22), wherein a first of the planetary gearing elements (20, 21, 23) of each planetary gearing (18, 19) is connected to an input shaft (15), wherein a second of the planetary gearing elements (20, 21, 23) of each planetary gearing (18, 19) is connected to a first output shaft (11) for driving a chassis unit (6) of a vehicle axle (2.2), **characterised in that** a third of the planetary gearing elements (20, 21, 23) of each planetary gearing (18, 19) is connected to a common further output shaft (12, 24) for the drive of the chassis units of a further vehicle axle (2.1).

2. Drive device according to claim 1 **characterised in that** the drive assemblies (16, 17) are controllable independently of one another.

3. Drive device according to claim 1 or 2 **characterised in that** the first planetary gearing element is the planetary wheel support (23), the second planetary gearing element is the hollow wheel (20) and the third planetary gearing element is the sun wheel (21) of the relevant planetary gearing (18, 19),
or
that the first planetary gearing element is the planetary wheel support (23), the second planetary gearing element is the sun wheel (21) and the third planetary gearing element is the hollow wheel (20) of the relevant planetary gearing (18, 19).

4. Drive device according to one of the preceding claims **characterised in that** in a mechanical drive train between the further output shaft (12, 24) and the further vehicle axle (2.1) there is a clutch assembly (13) through which in a first operating state a drive connection is present between the transmission assembly (8, 8a) and the further vehicle axle (2.1) and which in a second operating state interrupts this drive connection and at the same time blocks rotation of the further output shaft (12, 24) which is connected drive-wise to the clutch assembly (3).

5. Drive device according to one of the preceding claims **characterised in that** the second of the planetary gearing elements (20, 21, 23) of each planetary gearing (18, 19) is provided on one of the first output shafts (11), and/or that the second of the planetary gearing elements (20, 21, 23) of each planetary gearing (18, 19) is connected through a gearwheel assembly (31) to one of the first output shafts (11).

6. Drive device according to one of the preceding claims **characterised in that** the third of the planetary gearing elements (20, 21, 23) of the planetary gearing (18, 19) are provided on a common shaft (24) of the transmission assembly (8, 8a), and that the common shaft (24) forms the further output shaft or is connected to the second output shaft (12) through a gearwheel connection (25).

7. Drive device according to one of the preceding claims **characterised by** controllable means (27) for blocking the function of the planetary gearing (18, 19) or for blocking the rotational movement of at least one planetary gearing element of the planetary gearing (18, 19) wherein the controllable means (27) for blocking the planetary gearing (18, 19) are each formed by way of example by at least one controllable clutch (27) which acts between the planetary wheel support (23) and the sun wheel (21) and/or the hollow wheel (20).

8. Drive device according to one of the preceding claims **characterised in that** the axes of the first output shafts (11) and the axes of the planetary gearings (18, 19) are arranged co-axial wherein the planetary gearing (18, 19) are aligned with their axes by way of example perpendicular to a vehicle longitudinal axis.

9. Drive device according to one of the preceding claims **characterised in that** the axes of the planetary gearing (18, 19) are aligned parallel to a vehicle longitudinal axis.

10. Drive device according to one of the preceding claims **characterised in that** the first output shafts (11) are off-set with their axes relative to one another radially by way of example in the vehicle longitudinal direction.

## Revendications

1. Ensemble d'entraînement pour un véhicule, en particulier une récolteuse, comprenant au moins deux essieux de véhicule pouvant être entraînés par deux arbres de sortie (11, 12) d'un dispositif de transmission (8, 8a),
dans lequel le dispositif de transmission (8, 8a) présente au moins deux arbres d'entrée (15) qui sont respectivement reliés à un organe d'entraînement réglable (16, 17),
dans lequel le dispositif de transmission (8, 8a) pour chaque organe d'entraînement (16, 17) présente au moins un engrenage planétaire (18, 19) avec trois éléments d'engrenage planétaire qui sont formés par une couronne à denture intérieure (20), par une roue solaire (21) et par un porte - satellite (23) avec au moins un pignon satellite (22),
dans lequel un premier des éléments d'engrenage planétaire (20, 21, 23) de chaque engrenage planétaire (18, 19) est relié à un arbre d'entrée (15),
dans lequel un deuxième des éléments d'engrenage planétaire (20, 21, 23) de chaque engrenage planétaire (18, 19) est relié chaque fois à un premier arbre de sortie (11) pour entraîner un train de roulement (6) d'un essieu de véhicule (2.2),
**caractérisé en ce qu'**un troisième des éléments d'engrenage planétaire (20, 21, 23) de chaque engrenage planétaire (18, 19) est relié à un autre arbre de sortie commun (12, 24) pour l'entraînement des trains de roulement d'un autre essieu de véhicule (2.1).

2. Ensemble d'entraînement selon la revendication 1, **caractérisé en ce que** les organes d'entraînement (16, 17) peuvent être commandés indépendamment l'un de l'autre.

3. Ensemble d'entraînement selon la revendication 1 ou 2, **caractérisé en ce que** le premier élément d'engrenage planétaire est le porte - satellite (23), le deuxième élément d'engrenage planétaire est la couronne à denture intérieure (20) et le troisième élément d'engrenage planétaire est la roue solaire (21) de l'engrenage planétaire (18, 19) concerné,
ou
**en ce que** le premier élément d'engrenage planétaire est le porte - satellite (23), le deuxième élément d'engrenage planétaire est la roue solaire (21) et le troisième élément d'engrenage planétaire est la couronne à denture intérieure (20) de l'engrenage planétaire (18, 19) concerné.

4. Ensemble d'entraînement selon l'une quelconque des revendications précédentes, **caractérisé en ce que** dans une ligne d'entraînement mécanique, il est prévu entre l'autre arbre de sortie (12, 24) et l'autre essieu de véhicule (2.1) un dispositif d'embrayage (13) par l'intermédiaire duquel il y a, dans un premier état de fonctionnement, une liaison d'entraînement entre le dispositif de transmission (8, 8a) et l'autre essieu de véhicule (2.1) et qui, dans un deuxième état de fonctionnement, interrompt cette liaison d'entraînement et bloque en même temps l'autre arbre de sortie (12, 24) relié en entraînement au système d'embrayage (13) pour empêcher sa rotation.

5. Ensemble d'entraînement selon l'une quelconque des revendications précédentes, **caractérisé**
**en ce que** le deuxième des éléments d'engrenage planétaire (20, 21, 23) de chaque engrenage planétaire (18, 19) est prévu sur un des premiers arbres de sortie (11),
et / ou
**en ce que** le deuxième des éléments d'engrenage planétaire (20, 21, 23) de chaque engrenage planétaire (18, 19) est relié chaque fois par un dispositif d'engrenage (31) à un des premiers arbres de sortie (11).

6. Ensemble d'entraînement selon l'une quelconque des revendications précédentes, **caractérisé en ce que** les troisièmes des éléments d'engrenage planétaire (20, 21, 23) des engrenages planétaires (18, 19) sont prévus sur un arbre commun (24) du dispositif de transmission (8, 8a), et **en ce que** l'arbre commun (24) forme l'autre arbre de sortie ou est relié par un train d'engrenages (25) au deuxième arbre de sortie (12).

7. Ensemble d'entraînement selon l'une quelconque des revendications précédentes, **caractérisé par** des moyens commandables (27) pour empêcher le fonctionnement des engrenages planétaires (18, 19) ou encore pour bloquer le mouvement de rotation d'au moins un élément d'engrenage planétaire des engrenages planétaires (18, 19), dans lequel les moyens commandables (27) pour bloquer les engrenages planétaires (18, 19) sont par exemple formés chaque fois par au moins un embrayage commandable (27) agissant entre le porte - satellite (23) et la roue solaire (21) et / ou la couronne à denture intérieure (20).

8. Ensemble d'entraînement selon l'une quelconque des revendications précédentes, **caractérisé en ce que** les axes des premiers arbres de sortie (11) et les axes des engrenages planétaires (18, 19) sont disposés de manière coaxiale, les engrenages planétaires (18, 19) étant orientés avec leurs axes par exemple perpendiculairement à un axe longitudinal du véhicule.

9. Ensemble d'entraînement selon l'une quelconque des revendications précédentes, **caractérisé en ce que** les axes des engrenages planétaires (18, 19) sont orientés parallèlement à un axe longitudinal du véhicule.

10. Ensemble d'entraînement selon l'une quelconque des revendications précédentes, **caractérisé en ce que** les premiers arbres de sortie (11) avec leurs axes sont décalés radialement l'un par rapport à l'autre, par exemple dans le sens longitudinal du véhicule.
